# EUROPÄISCHE PATENTANMELDUNG

(11) **EP 0 960 602 A2**
(43) Veröffentlichungstag der Anmeldung: **01.12.1999**
(21) Anmeldenummer: 99810349.3
(22) Anmeldetag: 26.04.1999
(51) Int. Cl.: A61C 3/00

(54) **Dentalinstrument und Verfahren zu seiner Herstellung**

(30) Priorität: 25.05.1998 CH 114598
(71) Anmelder: HAWE NEOS DENTAL Dr. H. V. WEISSENFLUH AG, 6934 Bioggio (CH)
(72) Erfinder: Kilcher, Beat, 6935 Bosco Luganese (CH); Weissenfluh, Beat A., 6925 Gentilino (CH)
(74) Vertreter: AMMANN PATENTANWAELTE AG BERN

(57) **Zusammenfassung**

Die Adhäsion von Zahnrestaurationsmaterial, insbesondere Composit-Material mit organischem Binder, auf Dentalinstrumenten (30) kann, im wesentlichen unabhängig vom Material, aus dem das Dentalinstrument besteht, dadurch verringert werden, dass die Arbeitsoberflächen (33) mit Vertiefungen versehen werden. Durch die Vertiefungen (9) ergibt sich eine Verringerung der Auflagefläche des Composit-Materials auf der Arbeitsfläche (33) und damit eine Verringerung des Anteils der Adhäsion, der auf physikalische Anziehungskräften, z. B. van-der-Waals-Kraft, beruhen. Sind die Vertiefungen (9) hinreichend klein, so wird allein durch die üblicherweise hohe Zähflüssigkeit von Composit-Material ein Eindringen in die Vertiefungen (9) erschwert. Können die Vertiefungen (9) zusätzlich noch durch das aufliegende Zahnersatzmaterial verschlossen werden, so bildet sich in den Vertiefungen (9) ein Luftpolster, das einem Eindringen von Zahnersatzmaterial zusätzlich entgegenwirkt.

## Beschreibung

Die vorliegende Erfindung betrifft ein Dentalinstrument gemäss Oberbegriff des Anspruchs 1 sowie ein Verfahren zu dessen Herstellung.

Composits, d. h. Zahnersatzmaterial mit härtbaren, in der Regel organischen Substanzen als Binder, werden mehr und mehr zum Standard-Füllungsmaterial in der Zahnheilkunde. Dies bedeutet, dass Vorteile und Nachteile dieser Materialien zentrale Bedeutung erhalten. Ein wesentlicher Nachteil ist, dass Composits bis heute stets mehr oder weniger am Instrument haften, mit dem das Material eingebracht oder modelliert wird. Das Material hat dadurch z. B. die hartnäckige Neigung, vom Füllunqsrand abgezogen zu werden. Seit die Tendenz dahin geht, Composits bereits im weichen Zustand möglichst nahe an die endgültige Form zu modellieren, damit die Finierarbeit möglichst reduziert wird, ist diese Erscheinung noch viel störender geworden.

Es mangelt nicht an Versuchen, das Problem zu lösen. Es wurden die unterschiedlichsten Materialien zur Herstellung von composit-Instrumenten verwendet, deren Oberfläche behandelt und alle möglichen Formen konstruiert. Bis heute blieben diese Bemühungen ohne Erfolg.

Der Zahnarzt hilft sich meist damit, dass er die Instrumente mit dünnflüssigem Composit-Bonding benetzt und so dieses Kleben überlistet. Dies bringt aber mit sich, dass das Füllmaterial verdünnt wird und an Qualität verliert. Darum wird diese Methode in Lehre und Forschung nicht befürwortet.

Es wird wohl nie möglich sein, das Kleben ganz zu eliminieren; und dies wäre auch gar nicht erwünscht. Das Composit soll so weit am Instrument haften, dass ein sicherer Transport des Materials von der Entnahmestelle zum Zahn möglich bleibt, ohne dass die Portion herunterfällt.

Einige aus der Literatur bekannten Verfahren, um die Adhäsion des Composits am Instrument einzustellen, bestehen darin, die Instrumente mit Teflon zu beschichten (C. M. Sturdevant, R. E. Barton, C. L. Sockwell und W. D. Strickland (Hrsg.), "The Art and Science of Operative Dentistry", 2. Auflage, C. V. Mosby Company, St. Louis, Toronto, Princeton, 1985, Seite 365), Befeuchtung mit Alkohol (J. Kanter, R. E. Koski und J. E. Gough, The Journal of Prosthetic Dentistry **41** (1979) Seite 45 - 50) und eine Oberflächenbeschichtung mit Titannitrid (J. G. Steele, J. F. McCabe und I. E. Barnes, J. Dent. **19** (1991) Seite 226 - 229). Die Verwendung von Trennmitteln (z. B. Alkohol) verlangt jedoch einen zusätzlichen Arbeitsgang und entsprechende Erfahrung, da die Menge des Trennmittels Einfluss auf die Adhäsion hat und eine übermässige Menge zu Veränderungen der Verarbeitungseigenschaften des Composits führen kann. Die Ausführung der Instrumente aus Teflon bzw. die Beschichtung mit Teflon schränkt zum einen die Wahl der Oberfläche und in gewissem Umfang auch die Formen ein und kann zum anderen in der Praxis nicht immer befriedigen.

Eine Aufgabe der vorliegenden Erfindung ist es daher, ein Dentalinstrument anzugeben, bei dem die Adhäsionseigenschaften gegenüber Composits auf eine andere Art eingestellt sind.

Ein solches Dentalinstrument ist im Anspruch 1 angegeben. Die weiteren Ansprüche geben bevorzugte Ausführungsformen und Herstellungsverfahren dieses Dentalinstruments an.

Für die Adhäsion von Composit-Material auf Dentalwerkzeugen wird von drei wesentlichen Mechanismen ausgegangen:
a) Mechanisch: Das Composit dringt in Unebenheiten oder Vertiefungen in der Oberfläche des Instruments ein und "verzahnt" sich sozusagen an der Oberfläche. Dieser Mechanismus ist bei glatten Oberflächen nur von geringer Bedeutung.
b) Physikalisch: Diese Adhäsion wird im wesentlichen durch die Anziehungskräfte zwischen Atomen der Oberfläche des Instrumentes und des Composit-Materials hervorgerufen, u. a. von den van-der-Waals-Kräften. Die Kraft steigt dabei mit zunehmender Kontaktfläche und ist insbesondere bei glatten Oberflächen von Bedeutung, also gerade bei Dentalinstrumenten.
c) Chemisch: Diese Adhäsion würde durch chemische Bindung zwischen dem Material des Instruments und des Composit-Material hervorgerufen. Da Composit-Material und Dentalinstrument jedenfalls nicht miteinander reagieren, ist dieser Adhäsionsmechanismus in der Regel ohne Bedeutung.

Aus dem Vorhergehenden geht hervor, dass in der Praxis nur die Adhäsionsmechanismen a und b von Bedeutung sind. Eine Einstellung der Adhäsionseigenschaften des Dentalinstrumentes durch die Wahl des geeigneten Materials zumindest für die Oberfläche, die mit dem Composit in Kontakt tritt, ist möglich und wird auch durchgeführt, ist jedoch jeweils auch abhängig von der Zusammensetzung des jeweiligen Composit-Materials. In der Regel ist es günstig, wenn die Oberfläche des Dentalinstrumentes aus einem Material mit geringer Oberflächenspannung besteht. Die Praxis lehrt jedoch, dass zum einen Werkzeuge mit z. B. Teflonoberfläche nicht für alle Anwendungszwecke geeignet sind bzw. von Praktikern aus anderen Gründen abgelehnt werden, und zum anderen die Adhäsion nicht immer bzw. gegenüber allen zur Verfügung stehenden Composit-Materialien die gewünschte Qualität aufweist.

Erfindungsgemäss kann jedoch die Adhäsion auch dadurch eingestellt werden, dass zumindest die Arbeitsoberfläche eines Dentalinstruments mit einer durchbrochenen Oberfläche ausgestattet wird. Im wesentlichen wird also die Oberfläche mit Vertiefungen ausgestattet, so dass das Composit-Material im Idealfall nur auf den Stegen zwischen den Vertiefungen aufliegt. Im Hinblick auf Mechanismus a ist dabei jedoch bevorzugt zu vermeiden, dass Composit-Material in die Vertiefungen eindringt, wodurch eine mechanische Adhäsion auftreten würde. Vermieden wird dies einerseits dadurch, dass die Vertiefungen hinreichend klein ausgeführt werden, so dass das relativ dickflüssige Composit-Material nur schwer in die Vertiefungen eindringen kann. Insbesondere bevorzugt sind jedoch Vertiefungen, die parallel zur Oberfläche einen geschlossenen Perimeter aufweisen, der bevorzugt zusätzlich auch keine zu grosse Abweichung von der Kreisform aufweist. Die Vertiefungen können demgemäss hemisphärisch sein. Die Vertiefungen können jedoch auch im Horizontalschnitt näherungsweise quadratisch oder polygonal sein, bevorzugt mit abgerundeten Ecken. Die sonstigen Abschnitte des Perimeters können auch gebogen oder unregelmässig geformt sein. Diese in der Praxis gefundene, vorteilhafte Wirkung der so ausgeführten Vertiefungen wird darauf zurückgeführt, dass sich in den Vertiefungen, wenn sie durch das Composit-Material auf der Oberfläche verschlossen werden, ein geschlossener Luftraum oder ein Luftpolster bildet, das einem Eindringen des Composit-Materials entgegenwirkt, insbesondere auch unter erhöhtem Druck beim Modellieren mit dem Composit.

Die Erfindung soll weiter unter Bezugnahme auf Figuren erläutert werden.
Figur 1 zeigt einen Ausschnitt aus einer mit sphärischen Mikrogrübchen versehenen Oberfläche;
Figur 2 zeigt einen senkrechten Schnitt zu einer Oberfläche im Prinzip gemäss Figur 1;
Figur 3 zeigt schematisch einen senkrechten Schnitt durch ein einzelnes Mikrogrübchen;
Figur 4 zeigt eine Draufsicht auf eine Arbeitsoberfläche eines Dentalinstrumentes;
Figur 5 zeigt eine schematische Ausschnittsvergrösserung aus Figur 4;
Figur 6 zeigt einen schematischen Schnitt durch eine Messapparatur zur Bestimmung der Adhäsionskraft;
Figur 7 zeigt eine Ausführungsform eines Dentalinstrumentes mit einem Stopfer und einem Spatel;
Figur 8 zeigt das Spatelende der Figur 7 vergrössert;
Figur 9 zeigt eine vergrösserte Draufsicht auf die Arbeitsfläche des Spatelendes gemäss Figur 8;
Figur 10 zeigt eine Seitenansicht des Endes der Spitze des Spatelendes gemäss Figur 8;
Figur 11 zeigt vergrössert das als Stopfer ausgebildete Ende des Dentalinstrumentes gemäss Figur 7;
Figur 12 zeigt eine vergrösserte Draufsicht auf das Ende des Stopfers gemäss Figur 11;
Figur 13 zeigt die Arbeitsfläche nochmals vergrössert des Stopfers gemäss Figur 11.

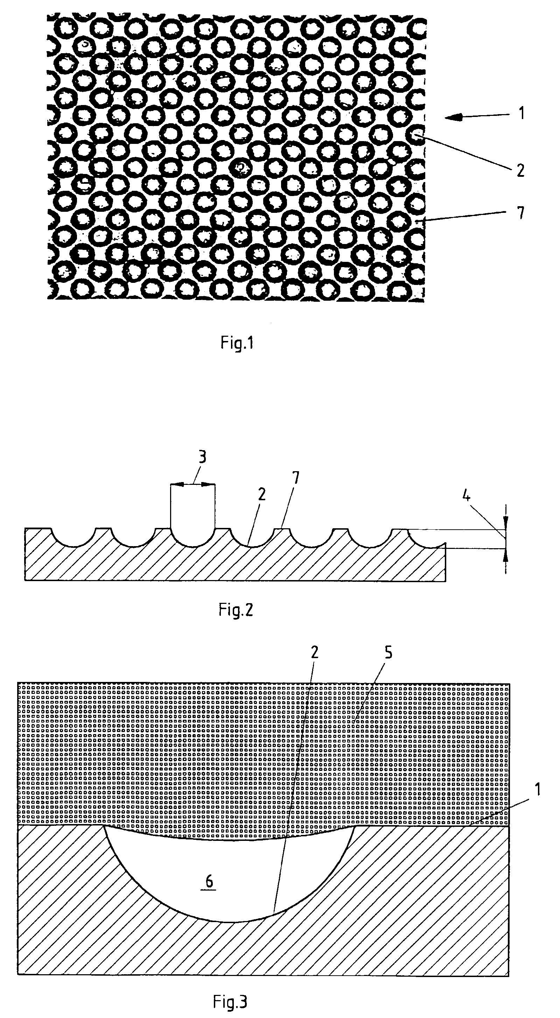

Figur 1 zeigt eine Fotografie einer Oberfläche 1, die eine gleichmässige Anordnung von hemisphärischen Mikrogrübchen 2 aufweist. Gemäss Figur 2 weisen die Mikrogrübchen 2 einen Oeffnungsdurchmesser 3 von 0,25 mm auf. Die Tiefe 4 der Mikrogrübchen beträgt ca. 0,1 mm.

Figur 3 stellt schematisch die Situation dar, wenn sich Composit-Material 5 auf der Oberfläche 1 befindet. Das Composit-Material dichtet das Mikrogrübchen 2 ab, so dass sich in seinem Innern ein Luftpolster 6 ausbildet. Dieses Luftpolster 6 verhindert weiteres Eindringen des Composit-Materials 5 in das Grübchen 2, wobei noch begünstigend oder verstärkend die hohe Viskosität (z. B. im Bereich 18 bis 1400 Pa*s) der heutzutage verwendeten Composit-Materialien hinzutritt. Da damit das Composit-Material nur noch auf einem Teil der Oberfläche 1 aufliegt, hier z. B. ca. 50 %, nämlich der Restoberfläche 7 zwischen den Mikrogrübchen 2, ist es verständlich, dass die auf dem physikalischen Mechanismus beruhende Adhäsion deutlich verringert wird.

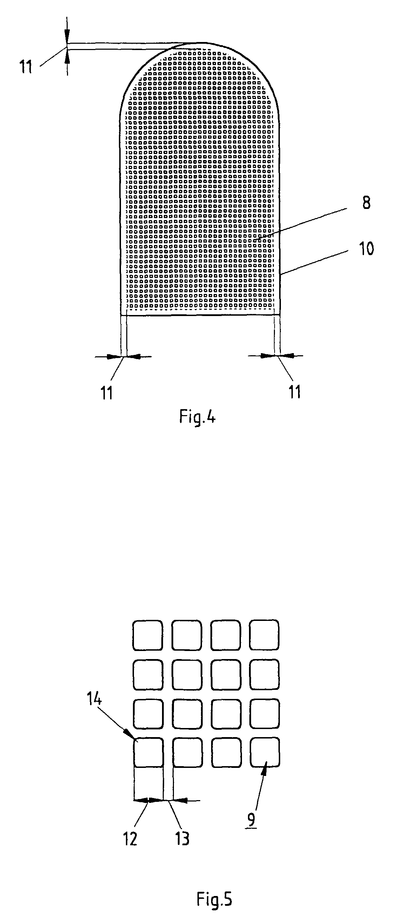

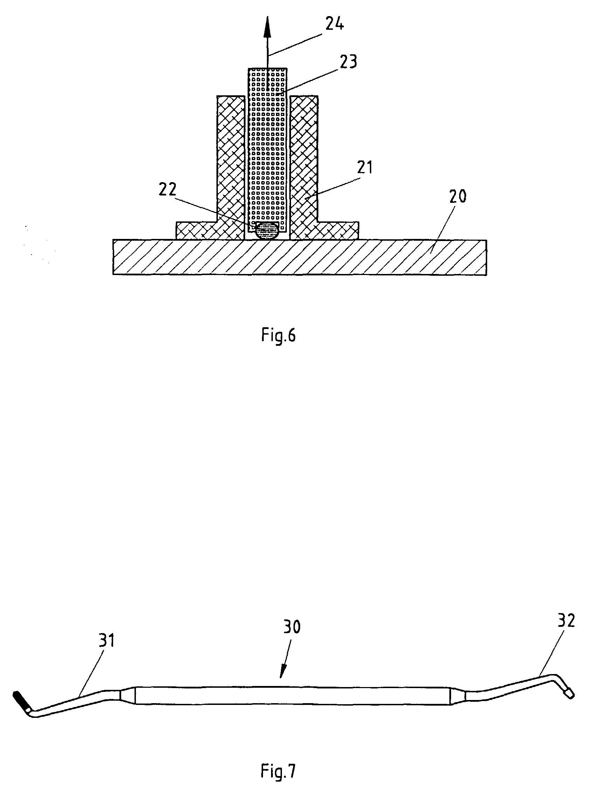

Figur 4 zeigt ein Ausführungsbeispiel einer erfindungsgemässen Oberfläche eines Dentalinstrumentes in einer Draufsicht. Die Oberfläche 8 ist hier mit einer regelmässigen Anordnung von Mikrogrübchen 9 (siehe vergrösserte Darstellung in Figur 5) fast vollständig bedeckt: Praktische Versuche haben gezeigt, dass es jedoch vorteilhaft ist, am Rand eine Zone 10 von Mikrogrübchen freizuhalten. Diese Randzone weist hier eine Breite 11 von 0,05 mm bis 0,1 mm auf. Durch die Randzone wird vermieden, dass sich an der Kante des Dentalinstruments unvollständig ausgebildete Mikrogrübchen befinden, in denen sich kein Luftpolster ausbilden kann. In diese kann Composit eindringen und Fäden ziehen. Die Randzone bewirkt auch eine höhere Widerstandskraft gegen Abnutzung.

Die Mikrogrübchen weisen im Horizontaischnitt eine quadratische Form mit abgerundeten Ecken auf. Die Kantenlänge 12 beträgt 0,15 mm, der Abstand 13 zwischen zwei Mikrogrübchen 9 beträgt 0,05 mm. Derartige Mikrogrübchen werden vorteilhaft mit einem Laser hergestellt. Die Tiefe der Mikrogrübchen 9 beträgt ca. 0,05 mm. Die Ecken des quadratischen Querschnitts sind mit einem Krümmungsradius 14 von 0,02 mm abgerundet.

Für die Herstellung dieser in etwa quadratischen Grübchen wurde ein Laser eingesetzt und eine Bearbeitungstiefe von ca. 0,05 mm eingestellt.

Mit den beiden beschriebenen beispielhaften Oberflächenausführungen wurden Vergleichsmessungen zu einer glatten Oberfläche durchgeführt. Das Basismaterial der Prüflinge war Stahl. Für die Bestimmung der Adhäsion wurde eine Apparatur eingesetzt, von der Figur 6 ein schematisches Schnittbild zeigt. Auf dem Prüfling 20 steht eine Hülse 21. Innerhalb der Hülse 21 befindet sich auf dem Prüfling 20 eine vorgegebene Menge des Composit-Materials 22. Auf dieses Composit-Material wird eine bestimmte Zeit lang ein in die Hülse 21 eingepasster Schwerkraftstössel 23 aufgesetzt. Unter seinem Gewicht wird das Composit-Material 22 auf die Oberfläche 20 gedrückt. Für die Adhäsion wird die Kraft 24 gemessen, die nötig ist, um den Schwerkraftstössel 23 wieder herauszuziehen. Von der gemessenen Kraft muss das Gewicht des Schwerkraftstössels (hier 35 g entsprechend 0,35 N) abgezogen. Die Ergebnisse für die Oberfläche gemäss Figur 1 bis 3 (unbehandelte Oberfläche: Stahl mit Rauigkeit Rₐ = 10⁻⁷ m) ist in den folgenden Tabellen 1 und 2 dargestellt.

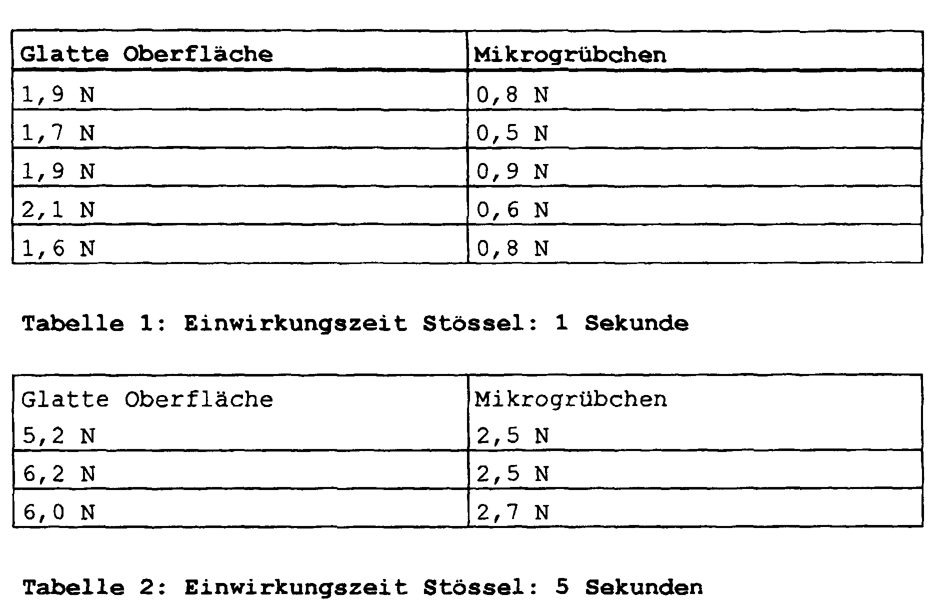

Aus beiden Tabelle kann eine ca. 50 % Reduktion der Adhäsion abgelesen werden, die in etwa auch der Reduktion der Auflagefläche für das Composit-Material durch die Mikrogrübchen entspricht. Weiterhin konnte durch Untersuchung der Oberfläche nach den Adhäsionsversuchen festgestellt werden, dass das Composit-Material nicht in die Mikrogrübchen eingedrungen ist.

Die Ergebnisse der Adhäsionsmessungen mit der Oberfläche gemäss Figuren 4 und 5 im Vergleich zu einer glatten Oberfläche (Material der Prüflinge: Polybutylenterephtalat (PBT)) zeigen die Tabellen 3 und 4.

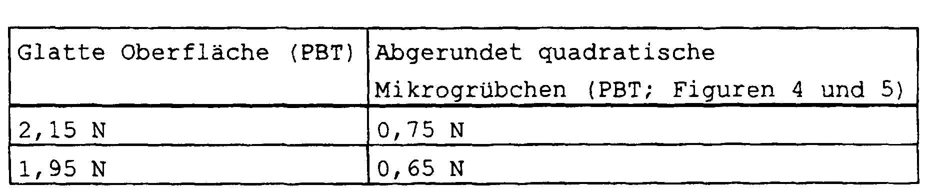

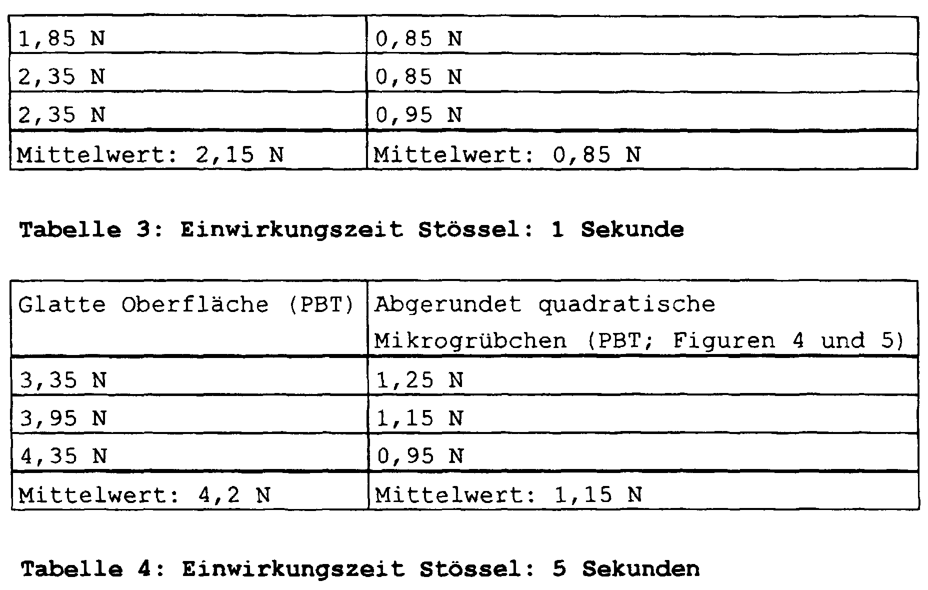

Aus einer optischen Ausmessung der mit Mikrogrübchen versehenen Fläche des Prüflings wurde ein Oberflächenanteil der Mikrogrübchen von 61 % ermittelt. Aus Tabelle 3 ergibt sich eine Reduktion der Adhäsionskraft auf ca. 39 % der Adhäsionskraft der unbehandelten Fläche, was zahlenmässig genau dem Anteil der zwischen den Mikrogrübchen stehen gebliebenen Oberfläche entspricht. Die Adhäsion bei längerer Einwirkung gemäss Tabelle 4 scheint sogar noch weiter abzunehmen, nämlich auf 30 % gegenüber der glatten Oberfläche.

Es soll nun noch ein Ausführungsbeispiel für ein praktisches Dentalinstrument wie in den Figuren 7 bis 13 dargestellt erläutert werden.

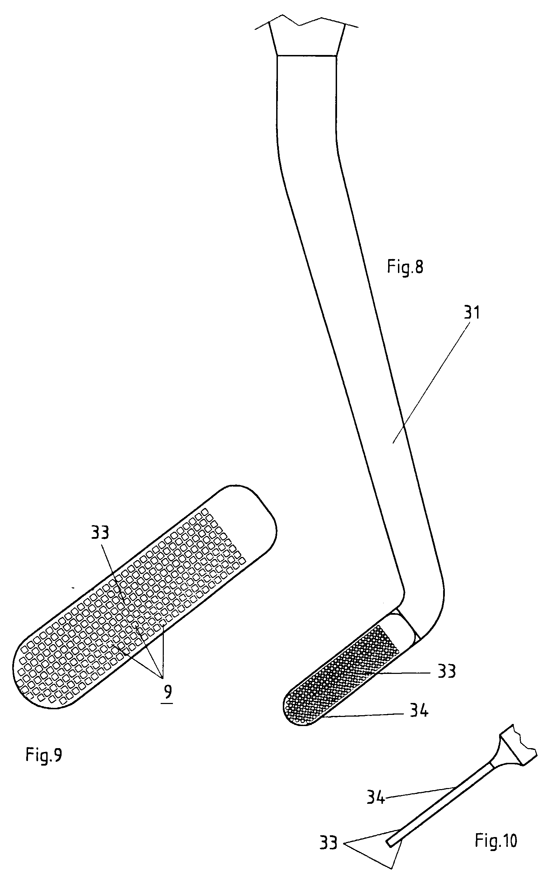

Das Dentalinstrument 30 ist an seinem einen Ende 31 als Spatel, am anderen Ende 32 als Stopfer ausgeführt (Figur 7). Das Spatelende 31 ist in Figur 8 vergrössert dargestellt, Figur 9 zeigt eine vergrösserte Draufsicht auf die Arbeitsfläche 33 und Figur 10 eine Seitenansicht auf die Spitze des Spatelendes 31. Zu bemerken ist dabei, dass die Arbeitsfläche 33 wie in Figur 10 angedeutet auf beiden Seiten der Spitzen 34 ausgebildet ist.

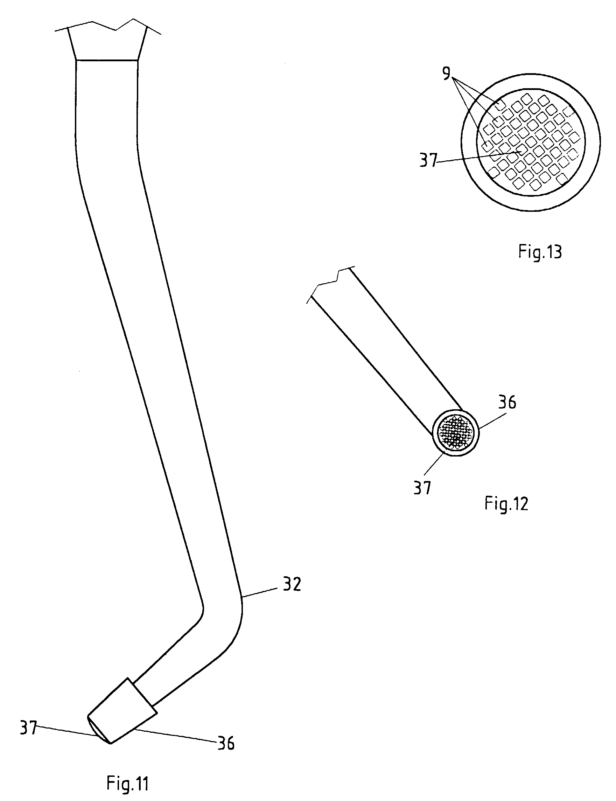

Figur 11 zeigt vergrössert das Stopferende 32, an dessen Spitze 36 die bombierte Stopffläche 37 mit Mikrogrübchen ausgebildet ist (Draufsicht in Figur 12 und Arbeitsfläche allein weiter vergrössert in Figur 13).

Aus der vorangehenden Beschreibung sind dem Fachmann eine Vielzahl Abwandlungen der erfindungsgemässen Oberflächengestaltung zugänglich. Insbesondere kann die Form und Dimensionierung der Grübchen oder allgemeiner der Vertiefungen in der Oberfläche je nach Weiterentwicklung, insbesondere der Bearbeitungstechnik und der Eigenschaftens der Composit-Materialien, insbesondere deren Viskosität, abgewandelt werden. Die beispielhaften einfachen Querschnitte (quadratisch mit abgerundeten Ecken, auch bedingt durch den Durchmesser des Laserstrahls; sphärisch) sind insbesondere auch nur als Beispiele zu sehen, denkbar sind auch andere Formen wie elliptisch, oval oder polygonal mit 5, 6 oder mehr Ecken. Denkbar ist es auch, die Grübchen verschieden auszufornien, z. B. einen Teil kreisförmig, einen Teil polygonal, und einen Teil dreieckig.

Für die Ausbildung des Luftpolsters, das einem Eindringen des Composit-Materials besonders wirksam entgegenwirkt, ist vorteilhafterweise zumindest die weitaus überwiegende Zahl der Vertiefungen so auszuführen, dass das Composit-Material die Vertiefungen im wesentlichen luftdicht abschliesst. Auch die Formgebung der Grübchen im Schnitt senkrecht zur Oberfläche kann in weitem Umfang variiert werden. Im Hinblick auf das Luftpolster ist es jedoch naheliegend, einerseits den Luftraum nicht zu gross zu wählen, d. h. die Grübchen nicht zu tief auszuführen, so dass auch bei geringfügigem Eindringen von Composit-Material bereits ein hoher Druckanstieg im Luftkissen resultiert. Andererseits könnte es bei zu flacher Ausführung auch geschehen, dass das Composit-Material doch stellenweise den Grund der Mikrogrübchen berührt. Die Ermittlung optimaler Geometrien der Mikrogrübchen und deren Dimensionierung benötigt jedoch grundsätzlich einfache Experimente, gegebenenfalls in Verbindung mit Adhäsionsmessungen, und können vom Fachmann aufgrund der Darstellung dieser Erfindung problemlos vorgenommen werden.

Im allgemeinen gilt, dass eine Verringerung der Restoberfläche 7 zu einer Verbesserung, d. h. einer Verminderung der Adhäsion, führt, da die Kontaktfläche und damit die Angriffsfläche für die physikalische Adhäsion verringert wird. Eine untere Grenze für den Anteil der Mikrogrübchen an der Gesantoberfläche kann zu 30 % angenommen werden (äquivalent zu 70 % Restoberfläche 7), problemlos realisierbar ist ein Anteil von 50 % wie in den Beispielen angegeben, aber auch 70 % ist herstellbar. Eine weitere Steigerung, u. a. im Zuge der Weiterentwicklung der Herstellungstechnik, ist zu erwarten.

Als alternatives, preiswertes Herstellungsverfahren hat sich Spritzgiessen erwiesen, da auch die Mikrogrübchen mittels eines eine entsprechende Negativform aufweisenden Werkzeugs hergestellt werden können.

## Patentansprüche

1. Dentalinstrument (30), insbesondere zum Applizieren und/oder Modellieren von Zahnersatzmaterial, namentlich Composit-Material, dadurch gekennzeichnet, dass mindestens ein Arbeitsbereich (33, 37) der Oberfläche des Dentalinstrumentes (30) mit einer Anordnung von Vertiefungen (2, 9) bedeckt ist, um die Adhäsion von Zahnersatzmaterial am Arbeitsbereich (33, 37) zu verringern.

2. Dentalinstrument (30) gemäss Anspruch 1, dadurch gekennzeichnet, dass die Mündungen mindestens der Mehrzahl und bevorzugt aller Vertiefungen (2, 9) an der Oberfläche einen geschlossenen Perimeter aufweisen, so dass durch auf der Oberfläche des Dentalinstrumentes (30) aufliegendes Zahnersatzmaterial (5, 22) diese Vertiefungen (2, 9) im wesentlichen luftdicht verschliessbar sind und in diesen dadurch ein Luftpolster (6) ausbildbar ist, das einem Eindringen von Zahnersatzmaterial in die Vertiefungen entgegenwirkt.

3. Dentalinstrument gemäss einem der Ansprüchen 1 oder 2, dadurch gekennzeichnet, dass die Vertiefungen mindestens 30 %, bevorzugt 50 % und insbesondere bevorzugt mindestens 70 % der Fläche des Arbeitsbereichs (33, 37) ausmachen.

4. Dentalinstrument (30) gemäss einem der Ansprüche 1 bis 3, dadurch gekennzeichnet, dass die Tiefe (4) mindestens der Mehrzahl der Vertiefungen (2, 9) mindestens 1/10, bevorzugt mindestens 1/4 und insbesondere bevorzugt mindestens 1/3 des mittleren Durchmessers der Mündungen zur Oberfläche beträgt.

5. Dentalinstrument gemäss einem der Ansprüche 1 bis 4, dadurch gekennzeichnet, dass die Mehrzahl der Vertiefungen (2, 9) einen mittleren Durchmesser der Mündung zur Oberfläche des Dentalinstrumentes von < 1 mm, bevorzugt höchstens 0,5 mm und insbesondere bevorzugt höchstens 0,2 mm aufweisen.

6. Dentalinstrument (30) gemäss einem der Ansprüche 1 bis 5, dadurch gekennzeichnet, dass die Mehrzahl der Vertiefungen (2, 9) mindestens im Bereich der Mündung zur Oberfläche (1) Rotationssymmetrie, bevorzugt mindestens dreizählig und insbesondere mindestens vierzählig, oder Kreissymmetrie aufweisen.

7. Dentalinstrument (30) gemäss einem der Ansprüche 1 bis 6 dadurch gekennzeichnet, dass die Mehrzahl der Vertiefungen (2, 9) mindestens im Bereich der Mündung zur Oberfläche (1) im wesentlichen eine der folgenden Randformen aufweist: Polygon, insbesondere eines mit 3 bis 10 Ecken, mit geraden oder gebogenen, insbesondere nach aussen gebogenen Kanten und scharfen oder abgerundeten Ecken; Kreis; Ellipse; Oval.

8. Dentalinstrument (30) gemäss einem der Ansprüche 1 bis 7, dadurch gekennzeichnet, dass der Arbeitsbereich (33, 37) mindestens zu einem wesentlichen Teil von einer Zone umgeben ist, die keine Vertiefung (2, 9) aufweist und eine Breite von mindestens 1/10, bevorzugt mindestens 1/4 des mittleren Durchmessers der Mündungen zur Oberfläche mindestens der Mehrzahl der Vertiefungen (2, 9) hat.

9. Verfahren zur Herstellung eines Dentalinstrumentes (30) gemäss einem der Ansprüche 1 bis 8, dadurch gekennzeichnet, dass die Vertiefungen (2, 9) durch Einsenken mittels Laser ausgebildet werden.

10. Verfahren zur Herstellung eines Dentalinstrumentes (30) gemäss einem der Ansprüche 1 bis 8, dadurch gekennzeichnet, dass mindestens eine Arbeitsfläche (33, 37) einschliesslich der Vertiefungen (2, 9), bevorzugt im wesentlichen das ganze Dentalinstrument (30), durch Spritzgiessen ausgebildet wird.
